# FASCICULE DE BREVET EUROPEEN

(11) **EP 1 529 673 B1**
(45) Date de publication et mention de la délivrance du brevet: **26.07.2006**
(21) Numéro de dépôt: 04292623.8
(22) Date de dépôt: 04.11.2004
(51) Int. Cl.: B60K 6/04

(54) **Unité de transmission pour une chaîne de traction d'un groupe motopropulseur de véhicules automobiles**
Übertragungseinheit für einen Antriebsstrang eines Antriebsaggregats von Kraftfahrzeugen
Transmission unit for a driveline of a propulsion system of vehicles

(30) Priorité: 07.11.2003 FR 0313154
(43) Date de publication de la demande: 11.05.2005
(73) Titulaire: Peugeot Citroen Automobiles S.A., 78140 Vélizy Villacoublay (FR)
(72) Inventeur: Chapelon, Lionel, 92100 Boulogne-Billancourt (FR); Victor, Jérôme, 92150 Suresnes (FR); Delporte, Stéphane, 35770 Vern sur Seiche (FR)
(74) Mandataire: Lanceplaine, Jean-Claude

(56) Documents cités:
- DE-A- 10 140 366
- DE-A- 10 140 424
- US-A1- 2003 199 359
- US-B1- 6 585 066

## Description

L'invention concerne une unité de transmission pour une chaîne de traction d'un groupe motopropulseur de type hybride parallèle, notamment pour véhicules automobiles.

Un tel groupe motopropulseur comprend essentiellement un moteur thermique ou plus généralement un moteur irréversible, une unité de transmission et une boîte de vitesses dont l'entrée est reliée à l'unité de transmission et la sortie à un arbre de roue.

Généralement, on entend par chaîne de traction hybride parallèle, une chaîne de traction fournissant à un arbre de roue une énergie mécanique à partir d'au moins un moteur de type irréversible, en général un moteur thermique, et d'au moins un moteur de type réversible, en général un moteur électrique, et dans laquelle le noeud d'énergie provenant des deux moteurs est de nature mécanique.

L'unité de transmission comporte de façon classique, le moteur électrique, ainsi qu'un premier embrayage de liaison entre le moteur thermique et le moteur électrique et un second embrayage de liaison entre le moteur électrique et la boîte de vitesses.

Dans les chaînes de traction hybride connues, par example US 6 585 066, l'unité de transmission intégrant le moteur électrique et les deux embrayages de liaison respectivement au moteur thermique et à la boîte de vitesses n'est pas prévue, ni dimensionnée pour être facilement interchangeable entre un embrayage simple tel qu'utilisé dans les chaînes de traction mono-source d'énergie ce qui impose dans le cas d'une implantation d'une telle unité de transmission de réaménager complètement l'implantation des autres éléments de la chaîne de traction dans le véhicule automobile.

L'invention a pour but de proposer une unité de transmission pour une chaîne de traction d'un groupe motopropulseur de type hybride parallèle qui évite les inconvénients précédemment mentionnés et qui est facilement intégrable dans une architecture d'implantation d'un groupe motopropulseur de type classique.

L'invention a donc pour objet une unité de transmission pour une chaîne de traction d'un groupe motopropulseur de type hybride parallèle, ladite unité comprenant un arbre d'entrée de mouvement destiné à être relié à un moteur thermique, un arbre de sortie de mouvement destiné à être relié à une boîte de vitesses, un moteur électrique comportant un stator et un rotor, un premier embrayage de liaison entre l'arbre d'entrée et un organe intermédiaire et un second embrayage de liaison entre l'organe intermédiaire et l'arbre de sortie, l'organe intermédiaire étant lié en rotation au rotor, caractérisé en ce que les deux embrayages sont disposés sur une même circonférence coaxialement aux arbres d'entrée et de sortie, au rotor et au stator du moteur électrique et en ce que le stator est porté par une partie d'un carter supportant à rotation l'organe intermédiaire, ledit carter définissant un logement étanche dans lequel sont montés le rotor, le stator, les embrayages, un organe mécanique de maintien de chacun des embrayages en position embrayée et un circuit hydraulique de commande en position débrayée de chacun desdits embrayages.

Selon d'autres caractéristiques de l'invention :
- les deux embrayages sont de type humide,
- l'arbre d'entrée est formé par un manchon comportant, à une première extrémité, des cannelures de liaison avec un volant amortisseur relié au moteur thermique et, à une seconde extrémité, un plateau du premier embrayage,
- l'arbre de sortie est formé par un manchon comportant, à une première extrémité, des cannelures de liaison avec un arbre primaire de l'arbre de vitesses et, à une seconde extrémité, un plateau du second embrayage,
- les deux plateaux sont disposés en regard l'un de l'autre et forment un plan de symétrie de part et d'autre duquel est placé chacun desdits embrayages,
- l'organe intermédiaire comprend une pièce en forme de cuvette comportant, d'une part, un voile muni d'un alésage axial de passage du manchon de l'arbre d'entrée, d'autre part, un bord périphérique s'étendant autour des deux plateaux et portant, sur sa face interne, une première série de disques du premier embrayage et une première série de disques du second embrayage,
- l'alésage du voile de l'organe intermédiaire est équipé d'un roulement de positionnement desdits organes intermédiaires sur le manchon de l'arbre de sortie,
- le voile de l'organe intermédiaire comporte, sur sa face externe, un prolongement cylindrique portant un roulement de positionnement dans un alésage axial ménagé dans le carter,
- le plateau de l'arbre d'entrée comporte une seconde série de disques du premier embrayage disposés entre les disques de la première série, lesdits disques du premier embrayage étant déplaçables en translation axiale et rappelés les uns vers les autres sous l'action de l'organe mécanique de maintien,
- le plateau de l'arbre de sortie porte une seconde série de disques du second embrayage disposés entre les disques de la première série, les disques du second embrayage étant déplaçables en translation axiale et rappelés les uns vers les autres sous l'action de l'organe mécanique de maintien,
- l'organe mécanique de maintien du premier embrayage en position embrayée comprend un plateau de commande déplaçable en translation axiale autour du manchon de l'arbre d'entrée et dans la direction du plan de symétrie sous l'action d'au moins un élément élastique de rappel pour maintenir les disques du premier embrayage appliqués les uns contre les autres,
- l'organe mécanique de maintien du second embrayage en position embrayée comprend un plateau de commande déplaçable en translation axiale autour du manchon de l'arbre de sortie et dans la direction du plan de symétrie sous l'action d'au moins un élément élastique de rappel pour maintenir les disques du second embrayage appliqués les uns contre les autres,
- le circuit hydraulique de commande du premier embrayage comprend un canal axial ménagé dans l'arbre primaire de la boîte de vitesses et comportant une première extrémité reliée à une alimentation en fluide sous pression et une seconde extrémité reliée, par un perçage transversal ménagé dans le manchon de l'arbre d'entrée, à une chambre disposée entre le plateau dudit arbre d'entrée et le plateau de commande dudit premier embrayage,
- le circuit hydraulique de commande du second embrayage comprend un canal axial ménagé dans l'arbre primaire de la boîte de vitesses et comportant une première extrémité reliée à une alimentation en fluide sous pression et une seconde extrémité reliée, par un perçage transversal ménagé dans le manchon de l'arbre de sortie, à une chambre disposée entre le plateau dudit arbre d'entrée et le plateau de commande dudit second embrayage.

L'invention concerne également un véhicule automobile comprenant une chaîne de traction de type hybride parallèle, comprenant un moteur thermique, une boîte de vitesses et une unité de transmission telle que précédemment mentionnée et reliant le moteur thermique à la boîte de vitesses.

D'autres caractéristiques et avantages de l'invention apparaîtront au cours de la description qui va suivre, donnée à titre d'exemple et faite en se référant aux dessins annexés, sur lesquels :
- la Fig. 1 est un schéma d'une chaîne de traction d'un groupe motopropulseur de type hybride parallèle comportant une unité de transmission conforme à l'invention,
- la Fig. 2 représente une vue schématique en coupe axiale d'une unité de transmission conforme à l'invention.

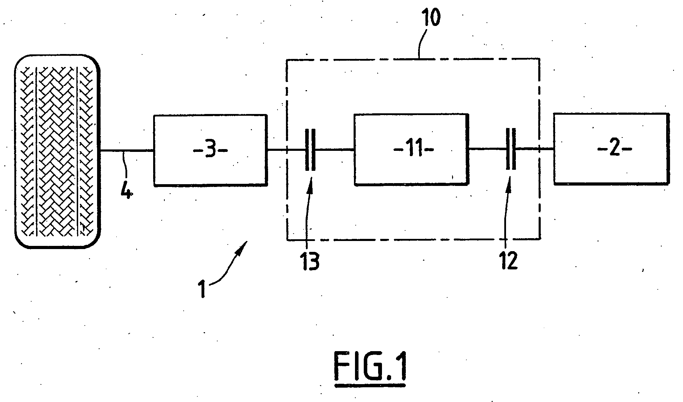

Sur la Fig. 1, on a représenté schématiquement une chaîne de traction hybride parallèle de type connu à laquelle s'applique plus particulièrement l'invention.

Un tel groupe motopropulseur désigné par la référence générale 1 comprend une chaîne de transmission formée par un moteur thermique 2, une unité de transmission désignée par la référence générale 10 et une boîte de vitesses 3 dont l'entrée est reliée à l'unité de transmission 10 et la sortie à un arbre de roue 4.

L'unité de transmission 10 comporte un moteur électrique 11 ou plus généralement un moteur réversible, ainsi qu'un premier embrayage 12 de liaison entre le moteur thermique 2 et le moteur électrique 11 et un second embrayage 13 de liaison entre le moteur électrique 11 et la boîte de vitesses 3.

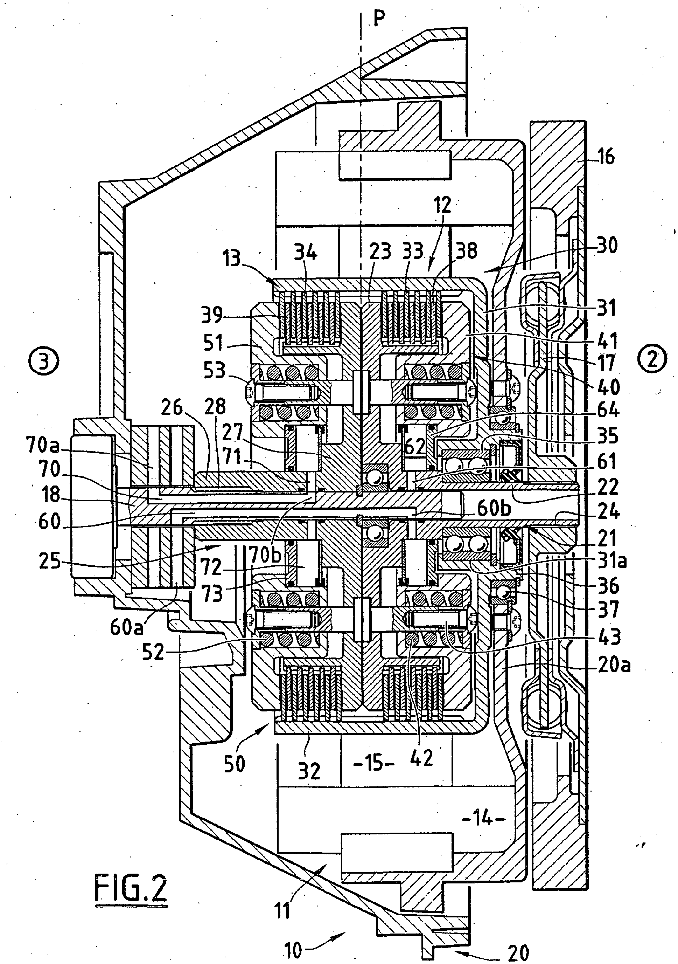

Sur la Fig. 2, on a représenté schématiquement le module de transmission 10 qui comprend le moteur électrique 11 formé par un stator 14 et un rotor 15 et les embrayages 12 et 13.

Ainsi que montré sur cette figure, le moteur électrique 11 et les deux embrayages 12 et 13 ainsi que les éléments de liaison de ces embrayages avec le moteur thermique 2 et/ou le moteur électrique 3 et les éléments de commande desdits embrayages qui seront décrits ultérieurement, sont disposés dans un logement interne d'un carter désigné par la référence générale 20.

L'unité de transmission 10 comprend un arbre d'entrée 21 formé par un manchon 22 et par un plateau 23 du premier embrayage 12 s'étendant perpendiculairement à l'axe du manchon 22 de l'arbre d'entrée 21. De manière classique, le moteur thermique 2 comporte un nez de vilebrequin, non représenté, muni d'un volant d'inertie 16 comportant un amortisseur 17 relié à l'arbre d'entrée 21 par des cannelures 24 ménagées sur la face externe du manchon 22 de l'arbre d'entrée 21. L'unité de transmission 10 comporte aussi un arbre de sortie 25 formé par un manchon 26 et par un plateau 27 du second embrayage 13 et s'étendant perpendiculairement audit manchon 26. L'arbre d'entrée 25 est relié à un arbre primaire 18 de la boîte de vitesses 3 par des cannelures 28 ménagées sur la face interne du manchon 26 dudit arbre d'entrée 25.

Le manchon 22 de l'arbre d'entrée 21 et le manchon 26 de l'arbre de sortie 25 sont coaxiaux et l'arbre primaire 18 de la boîte de vitesses 3 traverse le manchon 26 sur toute sa longueur et débouche dans le manchon 22, ainsi que montré sur la Fig. 2.

Le plateau 23 de l'arbre d'entrée 21 et le plateau 27 de l'arbre de sortie 25 sont disposés en regard l'un de l'autre et forme un plan de symétrie "P" de part et d'autre duquel est placé chacun desdits embrayages 12 et 13.

Ainsi que montré à la Fig. 2, les embrayages 12 et 13 qui sont de type humide, sont disposés sur une même circonférence et coaxialement par rapport aux arbres d'entrée 21 et de sortie 25. De même, le stator 14 et le rotor 15 du moteur électrique 11 sont disposés coaxialement avec les embrayages 12 et 13 ainsi qu'avec les arbres d'entrée 21 et de sortie 25 et le stator 14 de ce moteur électrique 11 est porté par une partie 20a du carter 20.

Par ailleurs, cette partie 20a du carter 20 est située du même côté que le premier embrayage 12 par rapport au plan de symétrie "P" et supporte à rotation un organe intermédiaire désigné dans son ensemble par la référence 30.

Comme on le verra ultérieurement, l'organe intermédiaire 30 assure la liaison entre l'arbre d'entrée 21 et le premier embrayage 12 ainsi que la liaison entre le second embrayage 13 et l'arbre de sortie 25.

Cet organe intermédiaire 30 est formé par une pièce en forme de cuvette comportant un voile 31 muni d'un alésage axial 31a de passage du manchon 22 du passage de l'arbre d'entrée 21 et d'un bord périphérique 32 s'étendant autour des plateaux 23 et 27, respectivement de l'arbre d'entrée 21 et de l'arbre de sortie 25.

Le bord périphérique 32 porte, du côté de l'arbre d'entrée 21 par rapport au plan de symétrie "P", une première série de disques 33 du premier embrayage 12 et, du côté de l'arbre de sortie 25 par rapport au plan de symétrie "P", une première série de disques 34 du second embrayage 13. Les disques 33 et 34 sont déplaçables axialement par translation sur la face interne du bord périphérique 32 de l'organe intermédiaire 30.

L'alésage 31a du voile 31 de cet organe intermédiaire 30 est équipé d'un roulement 35 de positionnement dudit organe intermédiaire 30 sur le manchon 22 de l'arbre d'entrée 21.

Par ailleurs, le voile 31 de l'organe intermédiaire 30 comporte, sur sa face externe, un prolongement cylindrique 36 coaxial à l'arbre d'entrée 21 et sur lequel est monté un roulement 37 du positionnement dans un alésage axial ménagé dans la partie 20a du carter 20 de façon à permettre la rotation de l'organe intermédiaire 30 portant le rotor 15.

Le plateau 23 de l'arbre d'entrée 21 porte une seconde série de disques 38 disposés entre les disques 33 du premier embrayage 12 et qui sont également montés sur ledit plateau 23 déplaçables axialement en translation. Les disques 33 et 38 du premier embrayage 12 sont maintenus serrés les uns contre les autres, c'est à dire en position embrayée, par un organe mécanique de maintien désigné par la référence générale 40. De même, le plateau 27 de l'arbre de sortie 25 porte une seconde série de disques 39 disposés entre les disques 34 du second embrayage 13 et qui sont également déplaçables axialement en translation. Les disques 34 et 39 du second embrayage 13 sont maintenus serrés les uns contre les autres, c'est à dire en position embrayée par un organe mécanique de maintien désigné par la référence générale 50.

L'organe mécanique 40 de maintien des disques 33 et 38 du premier embrayage 12 en position embrayée comprend un plateau de commande 41 déplaçable en translation axiale autour du manchon 22 de l'arbre d'entrée 21 et dans la direction du plan de symétrie "P". Le bord périphérique du plateau 41 applique une force sur les disques 33 et 38 du premier embrayage 12 sous l'action d'au moins un élément élastique 42. Dans l'exemple de réalisation représenté sur la Fig. 2, chaque élément élastique de rappel 42 est formé par un ressort hélicoïdal et qui sont au nombre de six uniformément répartis autour du manchon 22 de l'arbre d'entrée 21 et montés chacun sur une tige de guidage 43. Les ressorts hélicoïdaux 42 exercent une force de rappel sur le plateau 41 en direction du plan de symétrie "P" afin de maintenir les disques 33 et 38 du premier embrayage 12 en position embrayée.

L'organe mécanique 50 est également formé par un plateau de commande 51 déplaçable en translation axiale autour du manchon 26 de l'arbre de sortie 25 et dans la direction du plan de symétrie "P" sous l'action d'au moins un élément élastique de rappel 52. Comme pour le premier embrayage 12, chaque élément élastique de rappel 52 est constitué, dans l'exemple de réalisation représenté à la Fig. 2, par un ressort hélicoïdal et qui sont au nombre de six uniformément répartis autour du manchon 26 de l'arbre de sortie 25. Chaque ressort hélicoïdal est monté sur une tige de guidage 53 disposée en regard d'une tige de guidage 43 d'un ressort hélicoïdal 42 du premier embrayage 12.

L'unité de transmission 10 comprend aussi un circuit hydraulique de commande en position débrayée de chacun des embrayages 12 et 13.

Le circuit hydraulique de commande du premier embrayage 12 comprend un canal axial 60 ménagé dans l'arbre primaire 18 de la boîte de vitesses 3 et comportant une première extrémité 60a reliée à un alimentation en fluide sous pression, non représentée, et une seconde extrémité 60b reliée par un perçage transversal 61 ménagé dans le manchon 22 de l'arbre d'entrée 21 à une chambre 62 disposée entre le plateau 23 de l'arbre d'entrée 21 et le plateau de commande 41 du premier embrayage 12. La chambre 63 est délimitée par un piston 63 concentrique au manchon 22 de l'arbre d'entrée 21 et qui agit sur le plateau de commande 41.

Le circuit hydraulique de commande du second embrayage 13 comprend un canal axial 70 ménagé dans l'arbre primaire 18 de la boite de vitesses 3 et s'étendant parallèlement au canal axial 60. Le canal axial 70 comporte une première extrémité 70a reliée à une alimentation en fluide sous pression, non représentée, et une seconde extrémité 70b reliée par un perçage transversal 71 ménagé dans le manchon 26 de l'arbre de sortie 25 à une chambre 72 disposée entre le plateau 27 de cet arbre d'entrée 25 et le plateau de commande 51 du second embrayage 13. La chambre 72 est délimitée d'un côté par un piston 73 concentrique au manchon 26 de l'arbre d'entrée 25 et qui agit sur le plateau de commande 51 sous l'effet de la pression du fluide hydraulique admit dans ladite chambre 72.

Lorsque les deux embrayages 12 et 13 sont en position embrayée, c'est à dire que les disques 33 et 38 du premier embrayage 12 sont maintenus appliqués les uns contre les autres par le plateau de commande 40 sous l'effet des ressorts hélicoïdaux 42 et que les disques 34 et 39 sont également maintenus serrés les uns contre les autres par le plateau de commande 53 sous l'effet des ressorts hélicoïdaux 52, le véhicule peut se déplacer en mode hybride, c'est à dire avec le moteur thermique 2 et le moteur électrique 11.

Lorsque le premier embrayage 12 est fermé, c'est à dire en position embrayée, et le second embrayage 13 est ouvert, c'est à dire en position débrayée sous l'effet de la pression du fluide hydraulique admit dans la chambre 72 par le passage axial 70, le moteur thermique 2 et le moteur électrique 11 sont liés par exemple pour recharger, par ledit moteur thermique 2, la batterie liée à ce moteur électrique 11 ou pour démarrer le moteur thermique 2 par le moteur électrique 11. Dans ce cas également, le moteur thermique 2 et la machine électrique 11 sont désaccouplés de la boîte de vitesses 3 et donc des roues du véhicule automobile.

Lorsque le second embrayage 13 est fermé, c'est à dire en position embrayée, le moteur électrique 11 et la boîte de vitesse 3 sont liés par exemple pour rouler en mode électrique pur si le premier embrayage 12 est en position ouverte, c'est à dire en position débrayée sous l'effet du fluide hydraulique admis dans la chambre 63 par le passage axial 60 ou pour récupérer sous forme électrique d'énergie cinétique du véhicule en décélération ou au freinage.

L'unité de transmission selon l'invention présente l'avantage d'être particulièrement compacte du fait de l'implantation des différents éléments composant cette unité de transmission si bien qu'elle peut facilement s'adapter à une chaîne de traction mono-source classique, et se substituer à un embrayage simple, pour former une chaîne de traction du type hybride parallèle, sans modification majeure des autres éléments de la chaîne de traction.

De plus, la partie du carter supportant le stator du moteur électrique joue également le rôle de séparation étanche entre un environnement humide constitué par l'intérieur du carter et un environnement sec à l'extérieur de ce carter et cette partie supporte également le roulement de positionnement du rotor du moteur électrique.

Enfin, le fait d'utiliser le rotor du moteur électrique ainsi que les deux embrayages comme inertie sur le vilebrequin du moteur thermique permet, en supprimant l'inertie secondaire initialement prévue dans une version non hybride de la chaîne de traction, de réduire l'encombrement axial du système d'amortissement et de ce fait le coût de ce système.

## Revendications

1. Unité de transmission pour une chaîne de traction d'un groupe motopropulseur de type hybride parallèle, notamment pour véhicules automobiles, ladite unité (10) comprenant un arbre d'entrée (21) de mouvement destiné à être relié à un moteur thermique (2), un arbre de sortie (25) de mouvement destiné à être relié à une boîte de vitesses (3), un moteur électrique (11) comportant un stator (14) et un rotor (15), un premier embrayage (12) de liaison entre l'arbre d'entrée (21) et un organe intermédiaire (30) et un second embrayage (13) de liaison entre l'organe intermédiaire (30) et l'arbre de sortie (25), l'organe intermédiaire (30) étant lié en rotation au rotor (15), **caractérisée en ce que** les deux embrayages (12, 13) sont disposés sur une même circonférence coaxialement aux arbres d'entrée (21) et de sortie (25), au stator (14) et au rotor (15) du moteur électrique (11) et **en ce que** le stator (14) est porté par une partie (20a) d'un carter (20) supportant à rotation l'organe intermédiaire (30), ledit carter (20) définissant un logement étanche dans lequel sont montés le stator (14), le rotor (15), les deux embrayages (12, 13), un organe mécanique (40, 50) de maintien de chacun des embrayages (12, 13) en position embrayée et un circuit hydraulique (60, 62, 70, 72) de commande en position débrayée de chacun desdits embrayages (12, 13).

2. Unité des transmissions selon la revendication 1, **caractérisée en ce que** les deux embrayages (12, 13) sont de type humide.

3. Unité de transmission selon la revendication 1, **caractérisée en ce que** l'arbre d'entrée (21) est formé par un manchon (22) comportant, à une première extrémité, des cannelures (24) de liaison avec un volant amortisseur (16, 17) relié au moteur thermique (2) et, à une seconde extrémité, un plateau (23) du premier embrayage (12).

4. Unité de transmission selon la revendication 1, **caractérisée en ce que** l'arbre de sortie (25) est formé par un manchon (26) comportant, à une première extrémité, des cannelures (28) de liaison avec un arbre primaire (18) de la boîte de vitesses (3) et, à une seconde extrémité, un plateau (27) du second embrayage (13).

5. Unité de transmission selon la revendication 3 ou 4, **caractérisée en ce que** les plateaux (23, 27) sont disposés en regard l'un de l'autre et forment un plan de symétrie de part et d'autre duquel est placé chacun desdits embrayages (12, 13).

6. Unité de transmission selon l'une quelconque des revendications précédentes, **caractérisée en ce que** l'organe intermédiaire (30) comprend une pièce en forme de cuvette comportant, d'une part, un voile (31) muni d'un alésage axial (31a) de passage du manchon (22) de l'arbre d'entrée (21) et, d'autre part, un bord périphérique (32) s'étendant autour des deux plateaux (23, 27) et portant, sur sa face externe, une première série de disques (33) du premier embrayage (12) et une première série de disques (34) du second embrayage (13).

7. Unité de transmission selon la revendication 6, **caractérisée en ce que** l'alésage (31a) du voile (31) de l'organe intermédiaire (30) est équipé d'un roulement (35) de positionnement dudit organe intermédiaire (30) sur le manchon (22) de l'arbre d'entrée (21).

8. Unité de transmission selon la revendication 6 ou 7, **caractérisée en ce que** le voile (31) de l'organe intermédiaire (30) comporte, sur sa face externe, un prolongement cylindrique (36) portant un roulement (37) de positionnement dans un alésage axial ménagé dans le carter (20).

9. Unité de transmission selon l'une quelconque des revendications 1 à 8, **caractérisée en ce que** le plateau (23) de l'arbre d'entrée (21) porte une seconde série de disques (38) du premier embrayage (12) disposés entre les disques (33) de la première série, les disques (33, 38) du premier embrayage (12) étant déplaçables en translation axiale et rappelés les uns vers les autres sous l'action de l'organe mécanique de maintien (40).

10. Unité de transmission selon l'une quelconque des revendications 1 à 8, **caractérisée en ce que** le plateau (27) du manchon (26) de l'arbre de sortie (25) porte une seconde série de disques (39) du second embrayage (13) disposés entre les disques (34) de la première série, les disques (34, 39) du second embrayage (13) étant déplaçables en translation axiale et rappelés les uns vers les autres sous l'action de l'organe mécanique de maintien (50).

11. Unité de transmission selon l'une quelconque des revendications 1 à 10, **caractérisée en ce que** l'organe mécanique de maintien (40) du premier embrayage (12) en position embrayée comprend un plateau de commande (41) déplaçable en translation axiale autour du manchon (22) de l'arbre d'entrée (21) et dans la direction du plan de symétrie sous l'action d'au moins un élément élastique de rappel (42) pour maintenir les disques (33, 38) du premier embrayage (12) appliqués les uns contre les autres.

12. Unité de transmission selon l'une quelconque des revendications 1 à 10, **caractérisée en ce que** l'organe mécanique de maintien (50) du second embrayage (13) en position embrayée comprend un plateau (51) déplaçable en translation axiale autour du manchon (26) de l'arbre de sortie (25) et dans la direction du plan de symétrie sous l'action d'au moins un élément élastique de rappel (52) pour maintenir les disques (34, 39) du second embrayage (13) appliqués les uns contres les autres.

13. Unité de transmission selon l'une quelconque des revendications 1 à 11, **caractérisée en ce que** le circuit hydraulique de commande du premier embrayage (12) comprend un canal axial (60) ménagé dans l'arbre primaire (18) de la boîte de vitesses (3) et comportant une première extrémité (60a) reliée à une alimentation en fluide sous pression et une seconde extrémité (60b) reliée par un perçage transversal (61) ménagé dans le manchon (22) de l'arbre d'entrée (21) à une chambre (62) disposée entre le plateau (23) dudit arbre d'entrée (21) et le plateau de commande (41) du premier embrayage (12).

14. Unité de transmission selon l'une quelconque des revendications 1 à 10 et 12, **caractérisée en ce que** le circuit hydraulique du second embrayage (13) comprend un canal axial (70) ménagé dans l'arbre primaire (18) de la boîte de vitesses (3) et comportant une première extrémité (70a) reliée à une alimentation en fluide sous pression et une seconde extrémité (70b) reliée à un perçage transversal (71) ménagé dans le manchon (26) de l'arbre de sortie (25) à une chambre (72) disposée entre le plateau (27) dudit arbre d'entrée (25) et le plateau de commande (51) dudit second embrayage (13).

15. Véhicule automobile comprenant une chaîne de traction du type hybride parallèle, ladite chaîne de traction comprenant un moteur thermique (2), une boîte de vitesses (3) et une unité de transmission (10) selon l'une quelconque des revendications précédentes, reliant le moteur thermique (2) à la boîte de vitesses (3).

## Claims

1. A transmission unit for a driveline of a power unit of parallel hybrid type, in particular for automotive vehicles, said unit (10) comprising a motion input shaft (21) to be connected to a heat engine (2), a motion output shaft (25) to be connected to a gearbox (3), an electric motor (11) comprising a stator (14) and a rotor (15), a first clutch (12) for connection between the input shaft (21) and an intermediate member (30), and a second clutch (13) for connection between the intermediate member (30) and the output shaft (25), the intermediate member (30) being connected for rotation with the rotor (15), **characterised in that** the two clutches (12,13) are disposed on the same circumference coaxially to the input shaft (21) and output shaft (25), to the stator (14) and to the rotor (15) of the electric motor (11), and **in that** the stator (14) is carried by a part (20a) of a casing (20) supporting for rotation the intermediate member (30), said casing (20) defining a fluid-tight compartment in which are mounted the stator (14), the rotor (15), the two clutches (12,13), a mechanical member (40,50) for maintaining each of the clutches (12,13) in an engaged position and a hydraulic circuit (60,62,70,72) for controlling each of said clutches (12,13) in a disengaged position.

2. A transmission unit according to claim 1, **characterised in that** the two clutches (12,13) are of wet type.

3. A transmission unit according to claim 1, **characterised in that** the input shaft (21) is formed by a sleeve (22) comprising, at a first end, splines (24) for connection with a damping flywheel (16,17) connected to the heat engine (2) and, at a second end, a plate (23) of the first clutch (12).

4. A transmission unit according to claim 1, **characterised in that** the output shaft (25) is formed by a sleeve (26) comprising, at a first end, splines (28) for connection with a main shaft (18) of the gearbox (3) and, at a second end, a plate (27) of the second clutch (13).

5. A transmission unit according to claim 3 or 4, **characterised in that** the plates (23,27) are arranged opposite one another and form a plane of symmetry on either side of which each of said clutches (12,13) is situated.

6. A transmission unit according to any one of the preceding claims, **characterised in that** the intermediate member (30) comprises a cup-shaped component comprising, on the one hand, a centre piece (31) provided with an axial bore (31a) for the passage of the sleeve (22) of the input shaft (21) and, on the other hand, a peripheral rim (32) extending around the two plates (23,27) and carrying, on its outer side, a first series of discs (33) of the first clutch (12) and a first series of discs (34) of the second clutch (13).

7. A transmission unit according to claim 6, **characterised in that** the bore (31a) of the centre piece (31) of the intermediate member (30) is provided with a bearing (35) for locating said intermediate member (30) on the sleeve (22) of the input shaft (21).

8. A transmission unit according to claim 6 or 7, **characterised in that** the centre piece (31) of the intermediate member (30) comprises, on its outer side, a cylindrical extension (36) carrying a bearing (37) for location in an axial bore provided in the casing (20).

9. A transmission unit according to any one of claims 1 to 8, **characterised in that** the plate (23) of the input shaft (21) carries a second series of discs (38) of the first clutch (12) disposed between the discs (33) of the first series, the discs (33,38) of the first clutch (12) being displaceable in axial translatory motion and being brought together under the action of the mechanical maintaining member (40).

10. A transmission unit according to any one of claims 1 to 8, **characterised in that** the plate (27) of the sleeve (26) of the output shaft (25) carries a second series of discs (39) of the second clutch (13) disposed between the discs (34) of the first series, the discs (34,39) of the second clutch (13) being displaceable in axial translatory motion and being brought together under the action of the mechanical maintaining member (50).

11. A transmission unit according to any one of claims 1 to 10, **characterised in that** the mechanical member (40) for maintaining the first clutch (12) in the engaged position comprises a control plate (41) displaceable in axial translatory motion about a sleeve (22) of the input shaft (21) and in the direction of the plane of symmetry under the action of at least one elastic return element (42) for maintaining the discs (33,38) of the first clutch (12) applied against one another.

12. A transmission unit according to any one of claims 1 to 10, **characterised in that** the mechanical member (50) for maintaining the second clutch (13) in the engaged position comprises a plate (51) displaceable in axial translatory motion about a sleeve (26) of the output shaft (25) and in the direction of the plane of symmetry under the action of at least one elastic return element (52) for maintaining the discs (34,39) of the second clutch (13) applied against one another.

13. A transmission unit according to any one of claims 1 to 11, **characterised in that** the hydraulic control circuit of the first clutch (12) comprises an axial duct (60) provided in the main shaft (18) of the gearbox (3) and comprising a first end (60a) connected to a supply of fluid under pressure and a second end (60b) connected by a transverse drilled hole (61) provided in the sleeve (22) of the input shaft (21) to a chamber (62) disposed between the plate (23) of said input shaft (21) and the control plate (41) of the first clutch (12).

14. A transmission unit according to any one of claims 1 to 10 and 12, **characterised in that** the hydraulic circuit of the second clutch (13) comprises an axial duct (70) provided in the main shaft (18) of the gearbox (3) and comprising a first end (70a) connected to a supply of fluid under pressure and a second end (70b) connected at a transverse drilled hole (71) provided in the sleeve (26) of the output shaft (25) to a chamber (72) provided between the plate (27) of said input shaft (25) [sic] and the control plate (51) of the second clutch (13).

15. An automotive vehicle comprising a driveline of parallel hybrid type, said driveline comprising a heat engine (2), a gearbox (3) and a transmission unit (10) according to any one of the preceding claims, connecting the heat engine (2) to the gearbox (3).

## Patentansprüche

1. Kraftübertragungseinheit für einen Antriebsstrang einer Antriebsmotorbaugruppe des Parallelhybrid-Typs, insbesondere für Kraftfahrzeuge, wobei die Einheit (10) eine Antriebswelle (21), die dazu bestimmt ist, mit einer Brennkraftmaschine (2) verbunden zu werden, und eine Abtriebswelle (25), die dazu bestimmt ist, mit einem Schaltgetriebe (3) verbunden zu werden, einen Elektromotor (11), der einen Stator (14) und einen Rotor (15) enthält, eine erste Kupplung (12) für die Verbindung der Antriebswelle (21) mit einem Zwischenorgan (30) und eine zweite Kupplung (13) für die Verbindung des Zwischenorgans (30) mit der Abtriebswelle (25) umfasst, wobei das Zwischenorgan (30) mit dem Rotor (15) drehbar verbunden ist, **dadurch gekennzeichnet, dass** die zwei Kupplungen (12, 13) auf demselben Umfang koaxial zu der Antriebswelle (21) und der Abtriebswelle (25), zum Stator (14) und zum Rotor (15) des Elektromotors (11) angeordnet sind und dass der Stator (14) von einem Teil (20a) eines Gehäuses (20) getragen wird, das das Zwischenorgan (30) drehbar unterstützt, wobei das Gehäuse (20) einen dichten Aufnahmesitz definiert, in dem der Stator (14), der Rotor (15), die zwei Kupplungen (12, 13), ein mechanisches Organ (40, 50) zum Halten jeder der Kupplungen (12, 13) in der eingerückten Stellung sowie einen Hydraulikkreis (60, 62, 70, 72) für die Steuerung jeder der Kupplungen (12, 13) in die ausgerückte Stellung angebracht sind.

2. Kraftübertragungseinheit nach Anspruch 1, **dadurch gekennzeichnet, dass** die zwei Kupplungen (12, 13) vom Nasskupplungstyp sind

3. Kraftübertragungseinheit nach Anspruch 1, **dadurch gekennzeichnet, dass** die Antriebswelle (21) durch eine Muffe (22) gebildet ist, die an einem ersten Ende Rillen (24) für die Verbindung mit einem mit der Brennkraftmaschine (2) verbundenen Schwungrad (16, 17) und an einem zweiten Ende eine Platte (23) der ersten Kupplung (12) aufweist.

4. Kraftübertragungseinheit nach Anspruch 1, **dadurch gekennzeichnet, dass** die Abtriebswelle (25) durch eine Muffe (26) gebildet ist, die an einem ersten Ende Rillen (28) für die Verbindung mit einer Hauptwelle (18) des Schaltgetriebes (3) und an einem zweiten Ende eine Platte (27) der zweiten Kupplung (13) aufweist.

5. Kraftübertragungseinheit nach Anspruch 3 oder 4, **dadurch gekennzeichnet, dass** die Platten (23, 27) einander gegenüber angeordnet sind und eine Symmetrieebene bilden, auf deren beiden Seiten jeweils eine der Kupplungen (12, 13) angeordnet ist.

6. Kraftübertragungseinheit nach einem der vorhergehenden Ansprüche, **dadurch gekennzeichnet, dass** das Zwischenorgan (30) ein Teil in Form eines Bechers umfasst, der einerseits eine mit einer axialen Bohrung (31a) für den Durchgang der Muffe (22) der Antriebswelle (21) versehene Abdeckung (31) und andererseits einen Umfangsrand (32), der sich um die zwei Platten (23, 27) erstreckt und auf seiner Außenfläche eine erste Reihe von Scheiben (33) der ersten Kupplung (12) und eine zweite Reihe von Scheiben (34) der zweiten Kupplung trägt,

7. Kraftübertragungseinheit nach Anspruch 6, **dadurch gekennzeichnet, dass** die Bohrung (31a) der Abdeckung (31) des Zwischenorgans (30) mit einem Wälzlager (37) für die Positionierung in einer in dem Gehäuse (20) ausgebildeten axialen Bohrung trägt.

8. Kraftübertragungseinheit nach Anspruch 6 oder 7, **dadurch gekennzeichnet, dass** die Abdeckung (31) des Zwischenorgans (30) auf ihrer Außenseite eine zylindrische Verlängerung (36) aufweist, die ein Lager (37) für die Positionierung in einer in dem Gehäuse (20) ausgebildeten axialen Bohrung trägt.

9. Kraftübertragungseinheit nach einem der Ansprüche 1 bis 8, **dadurch gekennzeichnet, dass** die Platte (23) der Antriebswelle (21) eine zweite Reihe von Scheiben (38) der ersten Kupplung (12) trägt, die zwischen den Scheiben (33) der ersten Reihe angeordnet sind, wobei die Scheiben (33, 38) der ersten Kupplung (12) axial translatorisch verlagerbar sind und unter der Wirkung des mechanischen Halteorgans (40) zueinander zurückgestellt werden.

10. Kraftübertragungseinheit nach einem der Ansprüche 1 bis 8, **dadurch gekennzeichnet, dass** die Platte (27) der Muffe (26) der Abtriebswelle (25) eine zweite Reihe von Scheiben (39) der zweiten Kupplung (13) trägt, die zwischen den Scheiben (34) der ersten Reihe angeordnet sind, wobei die Scheiben (34, 39) der zweiten Kupplung (13) axial translatorisch verlagerbar sind und unter der Wirkung des mechanischen Halteorgans (50) zueinander zurückgestellt werden.

11. Kraftübertragungseinheit nach einem der Ansprüche 1 bis 10, **dadurch gekennzeichnet, dass** das mechanische Halteorgan (40) der ersten Kupplung (12) in der eingerückten Position eine Steuerplatte (41) umfasst, die axial translatorisch um die Muffe (22) der Antriebswelle (21) und in Richtung der Symmetrieebene unter der Wirkung wenigstens eines elastischen Rückstellelements (42) verlagerbar ist, um die Scheiben (33, 38) der ersten Kupplung (12) gegeneinander gedrückt zu halten.

12. Kraftübertragungseinheit nach einem der Ansprüche 1 bis 10, **dadurch gekennzeichnet, dass** das mechanische Halteorgan (50) der zweiten Kupplung (13) in der eingerückten Stellung eine Platte (51) umfasst, die axial translatorisch um die Muffe (26) der Abtriebswelle (25) und in der Richtung der Symmetrieebene unter der Wirkung wenigstens eines elastischen Rückstellelements (52) verlagerbar ist, um die Scheiben (34, 39) der zweiten Kupplung (13) gegeneinander gedrückt zu halten.

13. Kraftübertragungseinheit nach einem der Ansprüche 1 bis 11, **dadurch gekennzeichnet, dass** der Hydrauliksteuerkreis der ersten Kupplung (12) einen axialen Kanal (60) umfasst, der in der Hauptwelle (18) des Schaltgetriebes (3) ausgebildet ist und ein erstes Ende (60a), das mit einer Versorgung für mit Druck beaufschlagtes Fluid verbunden ist, und ein zweites Ende (60b), das über eine transversale Durchlochung (61), die in der Muffe (22) der Antriebswelle (21) ausgebildet ist, mit einer Kammer (62) verbunden ist, die zwischen der Platte (23) der Antriebswelle (21) und der Steuerplatte (41) der ersten Kupplung (12) angeordnet ist, umfasst.

14. Kraftübertragmagseinheit nach einem der Ansprüche 1 bis 10 und 12, **dadurch gekennzeichnet, dass** der Hydraulikkreis der zweiten Kupplung (13) einen axialen Kanal (70) umfasst, der in der Hauptwelle (18) des Schaltgetriebes (3) ausgebildet ist und ein erstes Ende (70a), das mit einer Versorgung für mit Druck beaufschlagtes Fluid verbunden ist, und ein zweites Ende (70b), das über eine transversale Durchlochung (71), die in der Muffe (26) der Abtriebswelle (25) ausgebildet ist, mit einer Kammer (72) verbunden ist, die zwischen der Platte (27) der Antriebswelle (25) und der Steuerplatte (51) der zweiten Kupplung (13) angeordnet ist, umfasst.

15. Kraftfahrzeug, das einen Antriebsstrang des Parallelhybrid-Typs enthält, wobei der Antriebsstrang eine Brennkraftmaschine (2), ein Schaltgetriebe (3) und eine Kraftübertragungseinheit (10) nach einem der vorhergehenden Ansprüche, die die Brennkraftmaschine (2) mit dem Schaltgetriebe (3) verbindet, umfasst.
